# EUROPEAN PATENT SPECIFICATION

(11) **EP 1 031 106 B1**
(45) Date of publication and mention of the grant of the patent: **16.07.2014**
(21) Application number: 98937746.0
(22) Date of filing: 10.08.1998
(51) Int. Cl.: G06Q 20/04

(54) **A RETAIL METHOD OVER A WIDE AREA NETWORK**
VERKAUFSVERFAHREN ÜBER EIN WEITRÄUMIGES NETZ
PROCEDE PERMETTANT DES ACTIVITES DE DETAIL SUR UN RESEAU LONGUE DISTANCE

(30) Priority: 11.08.1997 US 908067
(43) Date of publication of application: 30.08.2000
(73) Proprietor: Trivnet Ltd., Even-Yehuda 40500 (IL)
(72) Inventor: WILF, Saar, 93806 Jerusalem (IL); RUVIO, Guy, 96264 Jerusalem (IL)
(74) Representative: Jackson, Robert Patrick
(86) International application number: PCT/IL1998/000373
(87) International publication number: WO 1999/008218

(56) References cited:
- EP-A- 0 779 587
- EP-A2- 0 780 802
- US-A- 5 621 797
- US-A- 5 715 314
- US-A- 5 754 655
- SIRBU M ET AL: "NETBILL: AN INTERNET COMMERCE SYSTEM OPTIMIZED FOR NETWORK- DELIVERED SERVICES" IEEE PERSONAL COMMUNICATIONS, IEEE COMMUNICATIONS SOCIETY, US, vol. 2, no. 4, 1 August 1995 (1995-08-01), pages 34-39, XP000517588 ISSN: 1070-9916
- COMBANIERE C: "NOUVELLES POSSIBILITéS DE PAIEMENT", REE: REVUE GENERALE DE L'ELECTRICITE ET DE L'ELECTRONIQUE, REVUE GENERALE DE L'ELECTRICITE S.A, FR, no. 4, 1 October 1995 (1995-10-01), pages 57-65, XP000533330, ISSN: 1265-6534
- GIFFORD D K ET AL: "PAYMENT SWITCHES FOR OPEN NETWORKS", DIGEST OF PAPERS OF THE COMPUTER SOCIETY COMPUTER CONFERENCE (SPRING) COMPCON. TECHNOLOGIES FOR THE INFORMATION SUPERHIGHWAY. SAN FRANCISCO, MAR. 5 - 9, 1995; [DIGEST OF PAPERS OF THE COMPUTER SOCIETY COMPUTER CONFERENCE (SPRING) COMPCON], LOS ALAMIT, vol. CONF. 40, 1 March 1995 (1995-03-01), pages 26-31, XP002938955, ISBN: 978-0-7803-2657-6

## Description

The present invention relates generally to a retail method for performing commercial transactions over a wide area network and more particularly to a retail method for performing commercial transactions over the Internet.

The Internet is a worldwide network of interconnected computers and computer networks. The Internet includes Internet service providers (ISPs) who provide Internet access to a large number of subscribers or users who may pay the ISP a fee for the access. The subscribers can be individuals or organizations and can access the Internet by connecting to the ISP using modems over the general switched telephony system (GSTN), or cable television networks, or other types of communication line infrastructure. The Internet also includes vendors who advertise products and services over the Internet and solicit orders from users.

Commercial transactions over the Internet can be performed in a variety of ways. A preferred way of payment is by credit card. However, because of security reasons there is great reluctance of the users to transmit credit card account information over the Internet. Additionally, in situations where the transaction amount is small, for example, a few dollars or less, it may not be practical for a vendor to use a credit card transaction.

PCT international publication No. WO 97/03410 to Egendorf discloses a method for Internet billing. According to Egendorf, an ISP can bill a billing account of a customer for products or services purchased from a vendor over the Internet, thereby avoiding the need to communicate the customer's credit card or account number over the Internet. However, the method is limited in that each ISP has to establish agreements with a multiplicity of vendors some of which may not be subscribers of the ISP. Furthermore, each vendor has to establish separate agreements with a multiplicity of ISPs to be able to use the method of WO 97/03410 for performing transactions with customers of different ISPs.

Combaniere C : "Nouvelles possibilités de paiement", REE : Revue Generale de L'electricite et de L'electronique, No. 4, 1 October 1995, p57-65 discloses a method of authenticating a client in coordination with an authentication centre. Once the authentication has been performed, a request of payment is transferred toward a point of sale of the merchant, then payment is effected by transferring money towards the point of sale.

Sirbu M et al : "Netbill : An internet commerce system optimized for network-delivered services", IEEE Personal communications, IEEE communications society, US, vol. 2, no. 4, 1 August 1995, p34-39 discloses a method for identifying a customer for the purpose of billing in an on-line transaction without requiring the customer to provide sensitive data (such as credit card details).

Gifford DK et al: "Payment Switches for Open Networks" Digest of papers of the computer society computer conference (Spring) compcon. technologies for the information superhighway. San Francisco, Mar. 5-9, 1995, Los Alamit, vol. conf. 40, pages 26-31 discloses an Internet payment switch that provides real-time authorisation suitable for direct use by merchant servers.

The present invention relates to a method which provides vendors and customers a secure and economical way of selling and purchasing goods over a wide area network.

In one aspect, the present invention provides the method of claim 1. In another aspect, the present invention provides the method of claim 2.

In one embodiment, a commercial account is established for customers at their network service provider. When a customer orders a product from a vendor via a wide area network, payment for the product is debited from the customer's network service provider account. A secure transaction service cooperates with the customer, the vendor and the network service provider to authorize the transaction.

Significantly, the invention enables a customer to purchase a product via the network without transmitting sensitive information such as a credit card number over the network. Moreover, the user does not need to install additional software on his computer for using the billing method of the present invention.

One embodiment of the present invention provides a retail method that is adapted for use over the Internet. However, other examples can be implemented in which the retail method is adapted for use over any wide area network using any suitable communication protocol which is within the scope of the present invention defined by the claims.

There is therefore provided, in accordance with an example of the present invention, a retail method over a wide area network. The network includes a point of sale computer station (e.g., a vendor's network server), a network service provider server operated by a network service provider, a customer computer station used by a customer and connected to the wide area network through the network service provider server, and a transaction server having access to identification information of the network service provider and the point of sale computer station.

The basic process flow of the retail method includes: Connecting the customer computer station to the point of sale computer station. Purchasing goods from the point of sale computer station by the customer. Validating the purchasing by the transaction server and the network service provider server. Charging the customer for the purchasing, the charging including a transaction including the steps of billing an account of the customer by the network service provider server a transaction sum and billing by the transaction server an account of the network service provider server the transaction sum. Supplying the goods to the customer. Remitting a portion of the transaction sum to a vendor operating the point of sale computer station.

In one preferred embodiment of the invention, the validating process includes: Automatically receiving by the transaction server from the customer computer station of the transaction details and identification information for identifying the point of sale computer station and the network address of the customer computer station. Sending a transaction verification form from the transaction server to the customer computer station, the transaction verification form includes at least the transaction details and information for contacting the network service provider server. Entering by the customer in the transaction verification form a confirmation or a denial of the transaction details. Sending by the customer computer station of the transaction details and the confirmation or the denial of the transaction details from the customer computer station to the network service provider server using the information for contacting the network service provider server included in the transaction verification form. Informing the transaction server by the network service provider server of the confirmation or the denial of the transaction details by the customer in the transaction verification form. Instructing the point of sale computer station by the transaction server to supply or deny the goods to the customer in accordance with the confirmation or the denial, respectively, of the transaction details by the customer.

In another preferred embodiment of the present invention, the network service provider provides the transaction verification form to the customer. Here, instead of the secure transaction server providing the form to the customer, the secure transaction server sends the necessary information to the network service provider to enable the network service provider to send the form.

In this embodiment, the step of validating includes: Automatically receiving by the transaction server from the customer computer station of transaction details of the transaction and identification information for identifying the point of sale computer station and the network address of the customer computer station. Sending the transaction details and the network address of the customer computer station from the transaction server to the network service provider server. The transaction server causing the customer computer station to contact the network service provider. Sending a transaction verification form from the network service provider server to the customer computer station, the transaction verification form including at least the transaction details. Entering by the customer in the transaction verification form a confirmation or a denial of the transaction details. Sending by the customer computer station of the confirmation or the denial of the transaction details from the customer computer station to the network service provider server. Informing the transaction server by the network service provider server of the confirmation or the denial of the transaction details by the customer in the transaction verification form. Instructing the point of sale computer station by the transaction server to supply or deny the goods to the customer in accordance with the confirmation or the denial, respectively, of the transaction details by the customer.

The invention also provides a secure transaction server configured to perform the method of the invention.

There is also provided, in accordance with a preferred embodiment of the present invention a system for using a retail method over a wide network. The system includes at least one network service provider server operated by a network service provider and connected to the wide area network. The system also includes at least one customer computer station used by a customer and connected to the wide area network through one of the network service provider servers. The system also includes at least one point of sale computer station connected to the wide area network and at least one transaction server having access to identification information of the at least one network service provider and the at least one point of sale computer station and connected to the wide area network.

The retail method steps performed by the system are similar to those of the methods discussed above. Namely, connecting one of the customer computer stations to one of the points of sale computer station. Purchasing goods from the point of sale computer station by the customer operating the customer computer station. Validating the purchasing by one of the transaction servers and one of the network service provider servers. Charging the customer for the purchasing, the charging including a transaction including the steps of billing an account of the customer by the network service provider server a transaction sum and billing by the transaction server an account of the network service provider server the transaction sum. Supplying the goods to the customer. Remitting a portion of the transaction sum to a vendor operating the point of sale computer station.

The validating steps performed by the system are similar to the method steps described above as well. In one embodiment, the step of validating includes: Automatically receiving by the transaction server from the customer computer station of transaction details of the transaction and identification information for identifying the point of sale computer station and the network address of the customer computer station. Sending a transaction verification form from the transaction server to the customer computer station, the transaction verification form including at least the transaction details and information for contacting the network service provider server. Entering by the customer in the transaction verification form a confirmation or a denial of the transaction details. Sending by the customer computer station of the transaction details and the confirmation or the denial of the transaction details from the customer computer station to the network service provider server using the information for contacting the network service provider server included in the transaction verification form. Informing the transaction server by the network service provider server of the confirmation or the denial of the transaction details by the customer in the transaction verification form. Instructing the point of sale computer station by the transaction server to supply or deny the goods to the customer in accordance with the confirmation or the denial, respectively, of the transaction details by the customer.

The system may also provide a retail method whereby the network service provider supplies the transaction verification form to the customer in a similar manner as performed by the method discussed above. In accordance with this embodiment of the system of the invention, the step of validating includes: Automatically receiving by the transaction server from the customer computer station of transaction details of the transaction and identification information for identifying the point of sale computer station and the network address of the customer computer station. Sending the transaction details and the network address of the customer computer station from the transaction server to the network service provider server. The transaction server causing the customer computer station to contact the network service provider. Sending a transaction verification form from the network service provider server to the customer computer station, the transaction verification form including at least the transaction details. Entering by the customer in the transaction verification form a confirmation or a denial of the transaction details. Sending by customer computer station of the transaction details and the confirmation or the denial of the transaction details from the customer computer station to the network service provider server. Informing the transaction server by the network service provider server of the confirmation or the denial of the transaction details by the customer in the transaction verification form. Instructing the point of sale computer station by the transaction server to supply or deny the goods to the customer in accordance with the confirmation or the denial, respectively, of the transaction details by the customer.

In another embodiment of the invention, the customer responds to the secure transaction server instead of the network service provider during the verification operation. For example, the customer does not contact the network service provider to send a transaction confirmation/denial. Instead, the customer sends the confirmation/denial to the secure transaction server. To ensure that the customer is authorized to make the transaction, the secure transaction server contacts the network service provider server to obtain the customer identity.

In another embodiment of the invention, the network service provider identifies the customer using the telephone number of the customer. The customer's telephone number is supplied to the network service provider, for example, over the telephony infrastructure when the customer calls the network service provider. In one example, the customer's telephone number is used to bill the customer's telephone account for the product the customer purchased from the vendor.

In another embodiment of the invention, the step of identifying the customer is done by the STS rather than the NSP. In this case, the STS remotely accesses the NSP's servers to match the network address with a user account. The STS may also carry out the step of determining whether the customer is authorized to make a purchase. As a result, the method of the invention may be practiced without installing the ISP-related software applications treated herein on the network service provider server.

In accordance with other embodiments of the invention, several methods may be used to obtain a customer's network address in the event the customer is using a proxy server. For example, the address may be obtained from the HTTP "Forwarded For" header. The address may be obtained by having the customer's browser connect in the background to an unproxied service. The address may be obtained by having the customer's browser connect in the background to an unproxied host. Alternatively, an application that will attempt to contact the secure transaction service or the network service provider may be downloaded to the customer's computer station.

Several other process steps may be performed in accordance with one or more embodiments of the invention. For example, the retail method may include the step of remitting a portion of the transaction sum to a network service provider operating the network service provider server. The retail method also may include the step of remitting a portion of the transaction sum to the transaction service provider operating the transaction server.

Further, in accordance with another preferred embodiment of the present invention, the identification information of the network service provider and the point of sale computer station includes information for associating a customer network address with a network service provider and technical information needed to contact the network service provider server, and information for associating a vendor identifier with the technical information needed to contact the point of sale computer station over the wide area network.

Furthermore, in accordance with another example of the present invention, the information for associating a customer and the information for associating the vendor are stored on the transaction server or accessible to the transaction server.

Furthermore, in accordance with another preferred embodiment of the present invention, the wide area network is the Internet, the network service provider is an Internet service provider, the information for associating a customer includes at least the Internet protocol (IP) address space of the Internet service provider server and the technical information needed to contact the Internet service provider, and the information for associating the vendor is technical information needed to contact the point of sale computer station over the Internet.

Furthermore, in accordance with another example of the present invention, the step of charging further includes the step of recording by the network service provider server of the transaction details for billing the customer by the network service provider.

Furthermore, in accordance with another preferred embodiment of the present invention, the step of remitting includes the step of crediting an account of the vendor by the portion of the transaction sum.

Furthermore, in accordance with another preferred embodiment of the present invention, the step of crediting is performed by a financial service provider.

Furthermore, in accordance with another preferred embodiment of the present invention, the financial service provider is selected from the group consisting of a bank and a credit card company.

Further yet, in accordance with another preferred embodiment of the present invention, the account of the vendor is a bank account or a credit card account.

Further still, in accordance with yet another preferred embodiment of the present invention, the communication between the point of sale computer station and the transaction server and between the transaction server and the network service provider server is encrypted.

Furthermore, in accordance with another preferred embodiment of the present invention, the transaction service provider operating the transaction server establishes a remitting agreement with the vendor for remitting a portion of the transaction sum to the vendor after the step of charging. The remitting agreement is established prior to using the retail method and the transaction service provider establishes a billing agreement with the network service provider for billing an account of network service provider the transaction sum for goods purchased by the customer from the point of sale computer station. The billing agreement is established prior to using the retail method.

Furthermore, in accordance with another preferred embodiment of the present invention, the network service provider establishes a billing agreement with the customer for billing an account of the customer the transaction sum for goods purchased by the customer from one or more point of sale computer stations. In one embodiment, the billing agreement may be established prior to using the retail method. In another embodiment, a customer may be presented the terms of the agreement the first time he uses the retail method. This may be accomplished, for example, by displaying a corresponding window or web page to the customer. In this case, the customer could accept the terms of the agreement by, for example, clicking a button on the window or web page.

Finally, in accordance with another example of the present invention, a per transaction billing agreement is established between the customer and the network service provider for billing an account of the customer the transaction sum for goods purchased by the customer from the point of sale computer station.

Preferred embodiments of the present invention will now be described by way of example only and with reference to the accompanying drawings, wherein similar reference characters refer to similar elements throughout and in which:
Fig. 1 is a schematic block diagram of a system for carrying out the retail method over the Internet, in accordance with a preferred embodiment of the present invention;
Fig. 2 is a schematic flow chart illustrating one embodiment of the steps of the retail method performed by a customer using the customer computer station of the system of Fig. 1;
Fig. 3 is a schematic flow chart illustrating one embodiment of the steps of the retail method performed by a point of sale computer station of the system of Fig. 1;
Fig. 4 is a schematic flow chart illustrating one embodiment of the steps of the retail method performed by a secure transaction server (STS) of the system of Fig. 1;
Fig. 5 is a schematic flow chart illustrating one embodiment of the steps of the retail method performed by an Internet service provider (ISP) server of the system of Fig. 1;
Fig. 6 is a schematic flow chart illustrating another embodiment of the steps of the retail method performed by an Internet service provider (ISP) server of the system of Fig. 1;
Fig. 7 is a schematic flow chart illustrating another embodiment of the steps of the retail method performed by a secure transaction server (STS) of the system of Fig. 1;
Fig. 8 is a schematic flow chart illustrating another embodiment of the steps of the retail method performed by an Internet service provider (ISP) server of the system of Fig. 1;
Fig. 9 is a schematic flow chart illustrating another embodiment of the steps of the retail method performed by a secure transaction server (STS) of the system of Fig. 1;
Fig. 10 is a schematic flow chart illustrating another embodiment of the steps of the retail method performed by a secure transaction server (STS) of the system of Fig. 1; and
Fig. 11 is a block diagram illustrating several data memory components in accordance with one embodiment of the invention.

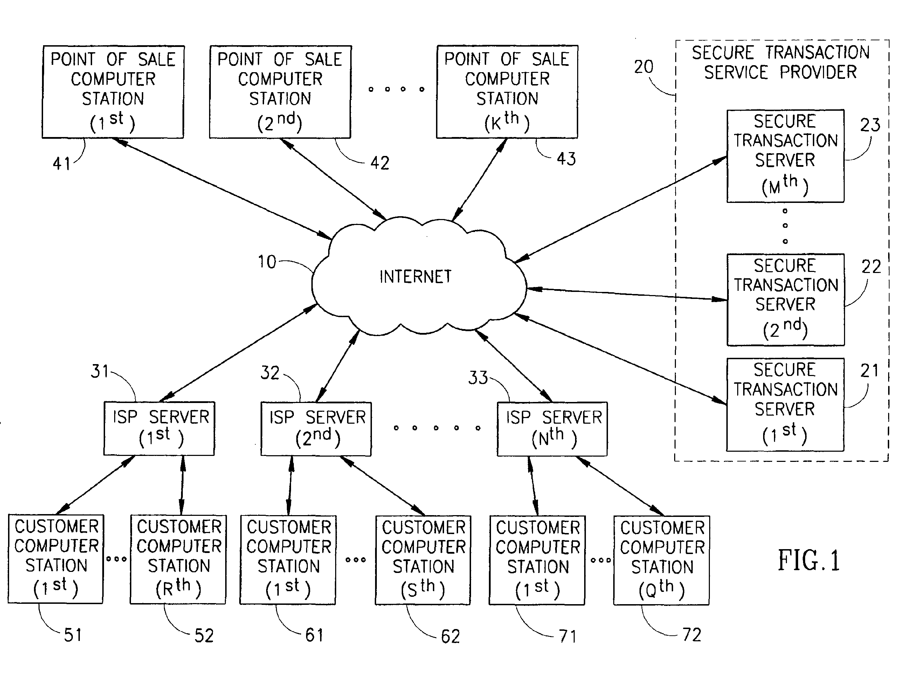

Reference is now made to Fig. 1 which is a schematic block diagram of a system for carrying out the retail method, in accordance with a preferred embodiment of the present invention. The system includes a secure transaction service provider 20 (STSP) which includes a plurality of M secure transaction servers (STS) labeled 21-23 connected to the Internet 10. The system also includes a plurality of N Internet service provider (ISP) servers labeled 31 - 33 connected to the Internet 10, and a plurality of K point of sale computer stations labeled 41 - 43, connected to the Internet 10. Each of the plurality of N ISP servers provides Internet access to a plurality of customer computer stations. For example, ISP server 31 provides Internet access to a plurality of R customer computer stations labeled 51-52, ISP server 32 provides Internet access to a plurality of S customer computer stations labeled 61-62 and ISP server 33 provides Internet access to a plurality of N customer computer stations labeled 71-72. Wherein each of the numbers K, M, N, Q, R and S may be any non-zero positive integer.

Typically, a customer connects to the Internet via an ISP. When connecting, the customer is identified using some standard method such as a username and password, and is assigned an IP address. The ISP server of the present invention then associates the assigned IP address with the customer identity, or with any other data suitable for identifying and/or billing the customer. In a non-limiting example, the telephone number of the customer can be associated with the customer's IP address, as described hereinabove. However, other suitable identifying and/or billing data types may be used.

The customer then initiates a transaction by accessing a point of sale computer station using one of the customer computer station, and interacts with the application running on the point of sale station to select a product to be purchased. In accordance with one embodiment of the invention, the customer is billed for the transaction by debiting an account that has been established between the customer and the customer's ISP. The STS coordinates the transaction authorization procedure that determines whether the customer has an account that can be debited. For example, the point of sale station asks the STS whether the customer is authorized to make a purchase using the system. The STS determines (in cooperation with the ISP) whether the customer is authorized and sends the appropriate response back to the point of sale station.

The secure transaction service provider 20 is a service provider operating one or more STSs connected to the Internet. The STSP 20 provides software modules which are installed on point of sale computer stations, on the ISP servers and on each of the STSs. It is noted that, if the ISP has more than one server, the software modules may be installed on each of the ISP servers or only on part of them. Each of the ISPs notifies the STSP 20 of the IP address space which the ISP allocates to its customers for connecting to the Internet, as allocated to the ISP by the proper authorities such as the American Registry for Internet Numbers ("ARIN"). Each of the ISPs may also provide the STSP with other technical information which may be needed such as the IP addresses of the ISP's proxy servers and the bandwidth of the ISP's connection to the Internet.

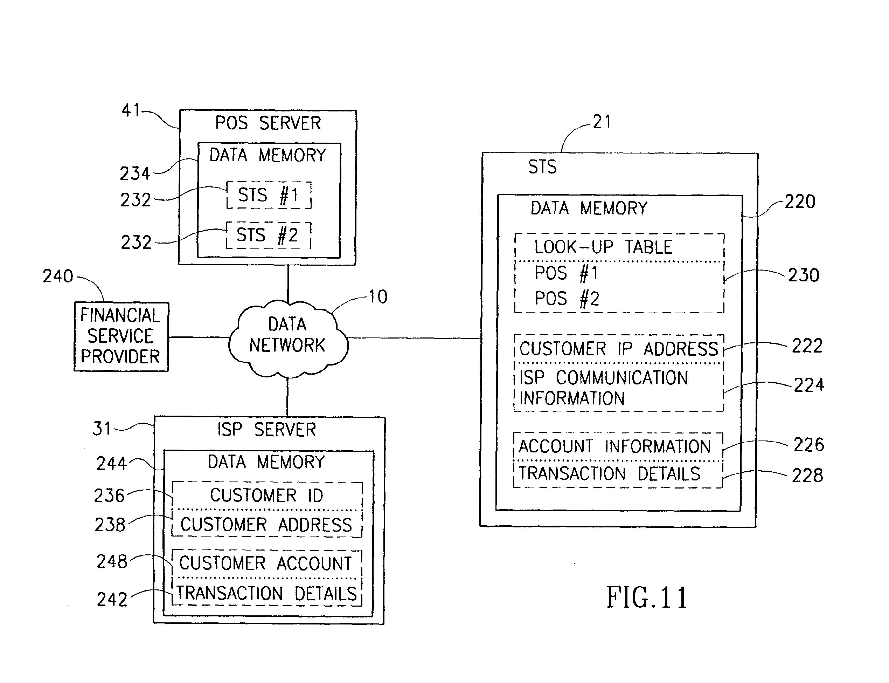

The software module installed on the ISP servers can identify a customer (236, FIGURE 11) currently using a given IP address (238, FIGURE 11). This software module also manages the billing of the customers in accordance with the purchase of goods from various vendors, manages the communication with the STS and the customer computer stations and checks whether the customer is certified to pay through the STSP as disclosed in detail hereinafter. It is noted that some of the functionality of the ISP software module might already exist on the ISP servers, and can be used instead.

The software module installed on the point of sale computer stations manages the registration of the sales and transactions done through the STSP involving the vendor. This software module also manages the pricing of goods offered by the vendor through the STSP. It is noted that some of the functionality of the point of sale software module might already exist on the point of sale servers, and can be used instead.

The software module on the point of sale computer stations also manages the communication with the STS, as disclosed in detail hereinafter.

The software module installed on the STS uses a database or a table (stored in a data memory 220, FIGURE 11) including identification information associating the IP address spaces (222, FIGURE 11) obtained from the ISPs as disclosed hereinabove with the information (224) needed to communicate with the ISPs owning these address spaces.

The software module installed on the STS can thus identify the ISP of a customer having an IP address by accessing the database or table disclosed hereinabove. The software module installed on the STSs also manages the financial information (226) needed for implementing the billing such as the bank account numbers of the ISPs and vendors, and the details of purchases (228). The software module installed on the STS also manages all the communication with the point of sale computer stations, customer computer stations and ISP servers, as disclosed in detail hereinafter.

Each of the point of sale computer stations 41 - 43 is assigned an ID number and the STSs have access to a look up table (LUT) 230 which associates each point of sale computer station's ID number with the technical information needed to contact the point of sale computer station.

The STSP, the customers, the vendors and the ISPs receive financial services from one or more financial service providers 240 (FIGURE 11) such as a credit card company or a bank or any other suitable financial service company. The STSP, the customers, the vendors and the ISPs have bank accounts or credit card accounts with the financial service providers and can provide a bank account number or a credit card number for performing financial transactions. In one example, transactions between the financial service company are accomplished using the Automatic Clearing House Format.

It should be understood that many variations of the embodiment of FIGURE 1 are possible in accordance with the teachings of the invention. For example, preferably each of the M STSs 21 - 23 is directly connected to the Internet backbone (not shown) for fast access. However, some or all of the STSs can be connected to the Internet 10 by any other suitable connection method.

Each of the K point of sale computer stations labeled 41 - 43 can be a server operated by a vendor and connected to the Internet directly, a point of sale application (e.g., a vendor application) residing on a server and operated for a vendor by an Internet presence provider (IPP) or any point of sale computer station connected to the Internet by any other suitable connection method.

It is noted that, the STSP 20 may also operate as an IPP. Thus, any one of the K points of sale may not be independent computer stations but may physically reside on one of the STSs 21 - 23. In such a case, the software for the vendor's site will be installed on one or more of the STSs 21 - 23.

It is further noted that, the ISP 31 - 33 may also operate as an IPP. Thus, any one of the K points of sale may not be independent computer stations but may physically reside on one of the ISP servers 31 - 33. In such a case, the software for the vendor's site will be installed on one or more of the ISP servers 31 - 33.

It is further noted that, each ISP may operate more than one server (not shown).

Each of the customer computer stations 51 - 52, 61 - 62 and 71 - 72 can be connected to the ISP servers 31, 32 and 33, respectively, through a modem and the GSTN or a cable modem and a cable television network, or by any other suitable communication method.

It is noted that, although the system of Fig. 1 is shown as including a plurality of STSs 21 -23, the system can also operate with a single STS.

It is noted that the STSs 21- 23 of the STSP 20 can be located in the same geographical location but can also be located singly or in groups at separate geographical locations.

With the above description in mind, procedures that may be performed by the embodiment of FIGURE 1 (or other embodiments of the invention) will now be treated in more detail.

In accordance with an example of the present invention, when any one of the customer computer stations 51 - 52, 61 - 62 or 71 - 72 connects to the wide area network 10 through the ISP servers 31, 32 or 33, respectively, the customer computer station can connect with any one of the point of sale computer stations labeled 41 - 43. The customer can request goods as a service or a product which are offered for sale by the vendor. For example, after entering the vendor's site, the customer may request goods by choosing a specific option on a web page.

If the vendor allows payment for the requested service or product through the STSP method, and the customer elects to use the STSP payment method option on the web page, the point of sale computer station causes the customer computer station to connect to one of the available STSs 21 - 23 and to transfer the ID of the point of sale computer station and the transaction details to the available STS. This can be done, for example, by using an hypertext markup language (HTML) tag such as an "href' tag referring to the STS server, followed by the ID of the point of sale computer station and the transaction details. This may also be done using an HTTP 302 Status Response accompanied by a "Location:" header, followed by the ID of the point of sale computer station and the transaction details. The address of the STS servers (232, FIGURE 11) associated with the point of sale computer may be stored in a data memory 234 (FIGURE 11). The transaction details include the price and serial number of the requested product or service and additional details such as the payment date or other payment terms.

After the customer computer station contacts the available STS, the STS sends the customer computer station a transaction verification form. The transaction verification form is generated by HTML or Java or by any other suitable method.

The transaction verification form informs the customer about the requested product or service, the price and the payment terms for the transaction. The transaction verification form also includes information (224, FIGURE 11) which is not shown to the customer. This information includes the address of the ISP server, the STS and/or the point of sale computer station which provides service to the customer. This information is obtained from the database or the table accessible to the STSs as disclosed hereinabove, by using the automatically revealed IP address (222, FIGURE 11) of the customer computer station, in the case where the ISP server address is included, or by using the vendor ID, in the case where the point of sale computer station address is included, and may be formatted in the transaction verification form as a uniform resource locator (URL) in an HTML link.

It is noted that, if the communication is performed over a wide area network having a communication protocol other than the exemplary IP protocol of the Internet, other data, appropriate for the communication protocol which is used over the wide area network, will be used to identify the customer's ISP.

The customer can either confirm or deny the transaction after inspecting the transaction details on the transaction verification form. If the customer confirms the transaction, the customer thus connects to the ISP server using the data sent from the STSs in the transaction verification form, and the relevant data in the transaction verification form is then sent to the ISP server. The software module of the ISP server identifies the customer (236, FIGURE 11) according to the IP address (238, FIGURE 11) or other information such as a physical communication port ID and checks whether the customer is certified to pay through the STSP (e.g., whether the customer has a debit account, e.g., 248, FIGURE 11, established with the ISP).

It is noted that the verification of the customer computer station's identity by the ISP has the advantage of being less susceptible to fraudulent interference, since the ISP server is not connected to the customer computer station over the Internet, in contrast to the STS or the point of sale computer station which are connected to the customer computer station over the Internet and are thus more susceptible to fraudulent interference.

If the customer is certified and the customer agreed to pay for the goods as disclosed hereinbelow, the software module of the ISP server records the transaction details (242, FIGURE 11) into a data memory 244 including the customer's user name, the current date and time, the price of the service or product and the terms of payment. The ISP server then connects to the STS and informs the STS whether the customer confirmed or denied the transaction and whether the customer is certified to pay through the STSP, and may also transfer the transaction details back to the STS for validation.

The STS then connects to the point of sale computer station using the information obtained from the STS's LUT as disclosed hereinabove, and informs the point of sale computer station whether or not to supply the customer with the requested service or product. The STS may also provide the point of sale computer station with the reason for denial of the service or product. On receipt of confirmation of the transaction from the STS, the point of sale computer station supplies the product or service to the customer. For example, if the ordered goods are a tangible product, the point of sale computer station processes the order and issues instructions for mailing the product to the customer. Alternatively, if the customer purchased non-tangible goods such as access to a database, the point of sale computer station enables the customer's computer station to access the database. In another example, if the customer purchased a software product, the point of sale computer station will download the software product over the Internet to the customer's computer station.

On receipt of a denial of the transaction, the point of sale computer station informs the customer computer station of the reason for which it can not fulfill the request.

From time to time, the STSP provides the financial service such as the bank or the credit card company with periodic reports including the details of all the transactions performed over a period of time. For each transaction, the details include the credit card number or bank account number of the ISP from which the transaction was initiated, the credit card number or bank account number of the vendor involved in the transaction and the amount and date of payment or payments.

The financial service provider transfers the proper amounts from the ISPs to the relevant vendors. The financial service provider may also deduct a commission for itself and/or for the STSP and/or for the ISP.

The ISP bills the customer for the transactions performed by the customer according to the billing agreement already existing between the customer and the ISP.

It is noted that, the billing of the customer could alternatively be done by another party, such as a telephone company, in which case all the relevant billing details are transferred from the STSP to this party.

It is further noted that the term ISP is used throughout the present application to represent any organization providing Internet access to one or more computer station. The organization may or may not charge a fee for supplying Internet access. For example the term ISP may represent a company owning equipment through which the employees of the company access the Internet. Thus, the customer computer stations can be the computer stations used by the employees of the company. In such a case, the billing of the customers which are company employees for the goods purchased from the vendor may be done by deducting the proper amounts from the salary of the employees.

It is still further noted that, in accordance with another preferred embodiment of the present invention, if the STS detects a problem during the steps of the method disclosed hereinabove, the STS will send a message to the relevant server or computer station causing it to cancel the transaction. For example, if the point of sale computer station did not inform the STS that the goods were supplied, the STS instructs the ISP to delete the relevant billing record. In another example, if the STS detects communication failures such as erroneous data or an inability to contact the point of sale computer station, the STS instructs the ISP to delete the relevant billing record.

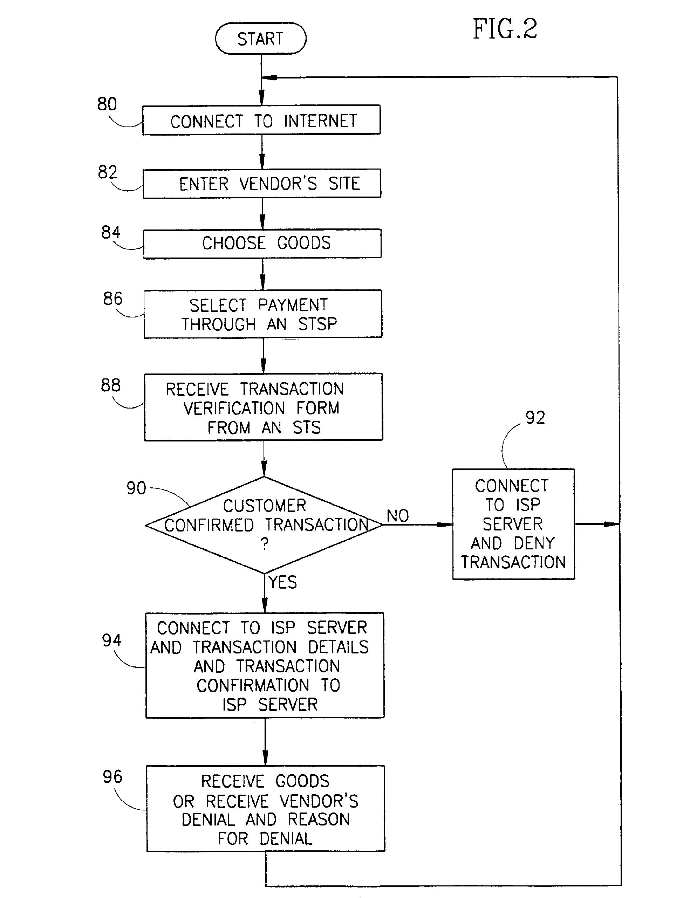

Reference is now made to Figs. 2 - 5. Fig. 2 is a schematic flow chart illustrating the steps of a method for Internet billing performed by a customer of the system of Fig. 1, in accordance with a preferred embodiment of the present invention. The customer connects to the Internet using the customer computer station (step 80). The customer enters a vendor's site on a point of sale computer station (step 82) and selects goods such as a service or a product which is offered for sale by the vendor (step 84). If the point of sale computer station allows payment for the selected goods through the STSP, the customer selects this payment method (step 86). The customer computer station then receives a transaction verification form from one of the STSs of the STSP 20 (step 88) as disclosed in detail hereinabove. The customer checks the transaction details displayed on the transaction verification form and can confirm or deny his willingness to accept the transaction conditions (step 90). For example, the customer can click on an "accept" or a "reject" button provided on the transaction verification form for confirming or denying the transaction, respectively.

If the customer did not confirm the transaction on the transaction verification form (step 92), the customer's computer station connects to the ISP server of the ISP which provides Internet access to the customer, denies the transaction and transfers control to step 80.

If the customer confirmed the transaction, the customer computer station connects to the ISP server of the ISP which provides Internet access to the customer and transfers the transaction details and the transaction confirmation to the ISP server (step 94). The customer can then receive the goods from the vendor or can alternatively receive a denial message from the vendor and the reason for the denial (step 96). For example, the customer can be given access to a data base or download a software product from the vendor's server. It is noted that if the transaction involved the sale of a tangible product, the product is sent by the vendor to the customer by mail or by any other suitable delivery method. Thus, in the case that the goods are a tangible product, the customer will receive only a transaction confirmation at step 96 and the actual acceptance of goods will occur some time in the future.

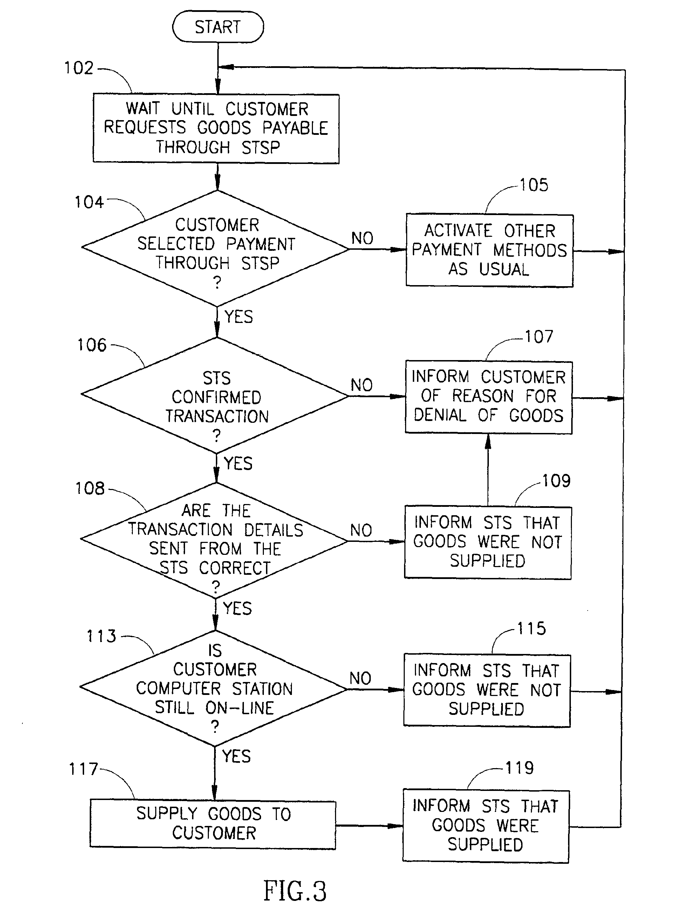

Fig. 3 is a schematic flow chart illustrating the steps of a method for Internet billing performed by a point of sale computer station of the system of Fig. 1, in accordance with a preferred embodiment of the present invention. The point of sale computer station waits until a customer requests goods which are payable through the STSP method (step 102). The point of sale computer station checks if the customer selected payment through the STSP (step 104). If the customer did not select the STSP payment method, the customer can still activate other payment methods in the vendor's site according to the customer choice (step 105) and control is transferred to step 102. If the customer selected the STSP payment method, the point of sale computer station checks if the STS confirmed the transaction (step 106). If the STS did not confirm the transaction, the point of sale computer station informs the customer through the customer computer station of the reasons for denying the goods (step 107) and transfers control to step 102. If the STS confirmed the transaction, the point of sale computer station checks whether the transaction details sent by the STS are correct (step 108). If the transaction details as sent by the STS are not correct, the point of sale computer station informs the STS that the goods were not supplied (step 109), informs the customer of the reason of denial of goods (step 107) and transfers control to step 102. If the transaction details sent by the STS are correct, the point of sale computer station checks whether the customer computer station is still on-line (step 113). If the customer computer station is not on-line, the point of sale computer station informs the STS that the goods were not supplied (step 115) and transfers control to step 102. If the customer computer station is still on-line, the point of sale computer station supplies the goods to the customer as disclosed hereinabove (step 117), informs the STS that the goods were supplied (step 119) and transfers control to step 102.

It is noted that if the transaction involved the sale of a tangible product, the product will be sent by the vendor to the customer by mail or by any other suitable delivery method.

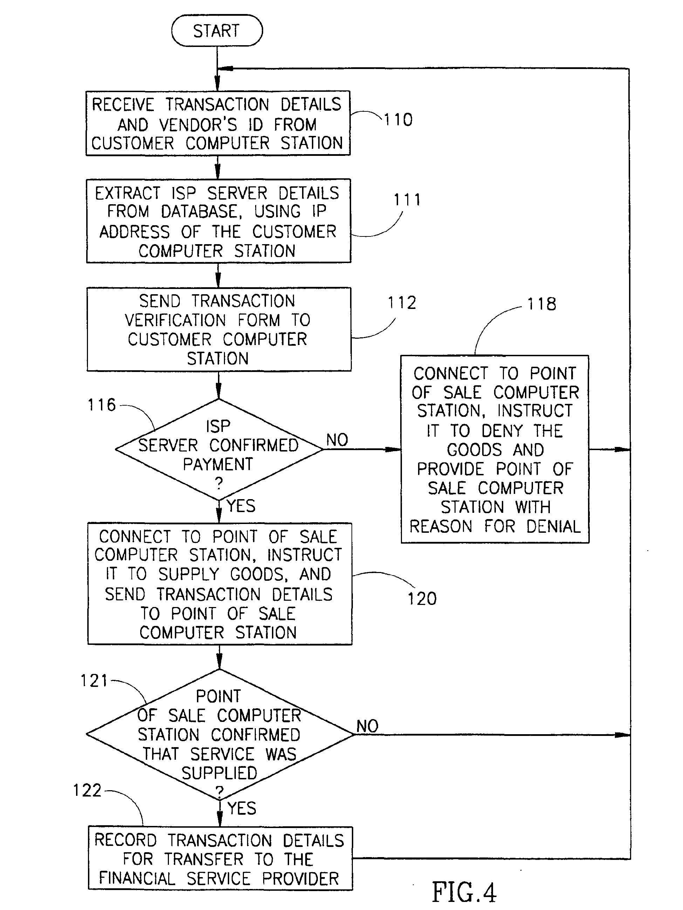

Fig. 4 is a schematic flow chart illustrating the steps of a method for Internet billing performed by a secure transaction server (STS) of the system of Fig. 1, in accordance with a preferred embodiment of the present invention. The STS receives the transaction details and the point of sale computer station ID from the customer computer station (step 110), extracts the ISP server details from the database or table as disclosed in detail hereinabove, using the IP address of the customer computer station which is received as part of the communication session details (step 111). The STS sends a transaction verification form to the customer computer station (step 112).

The STS waits for a reply from the ISP server of the ISP which provides service to the customer and then checks whether the ISP server confirmed the payment (step 116). If the ISP server has not confirmed the payment, the STS connects to the point of sale computer station, instructs the point of sale computer station to deny goods from the customer and provides the point of sale computer station with the reason for the denial (step 118). The STS then transfers control to step 110. If the ISP server confirms payment, the STS connects to the point of sale computer station, instructs the point of sale computer station to supply the service or product to the customer and sends the transaction details to the point of sale computer station (step 120). The STS then checks whether the point of sale computer station confirmed that the goods were supplied (step 121). It is noted that, if the goods are tangible, the vendor's confirmation may include a confirmation that a mailing order for the purchased goods was processed.

If the point of sale computer station did not confirm that the goods were supplied, the STS transfers control to step 110. If the point of sale computer station confirmed that the goods were supplied, the STS records the transaction details for transfer to the financial service provider (step 122) and transfers control to step 110.

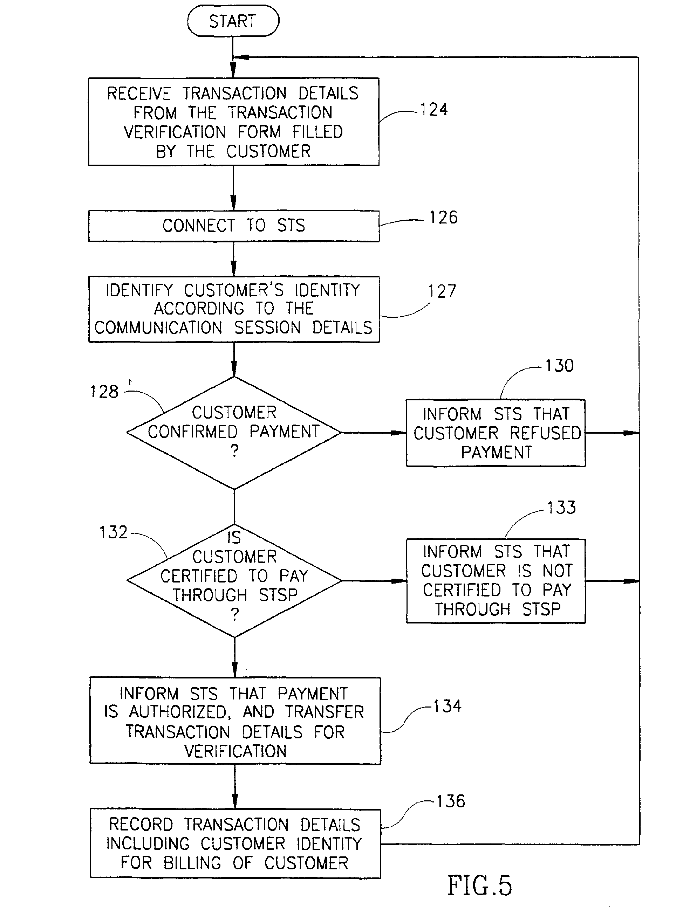

Fig. 5 is a schematic flow chart illustrating the steps of a method for Internet billing performed by an ISP server of the system of Fig. 1, in accordance with a preferred embodiment of the present invention. The ISP server receives the transaction details from the transaction verification form as filled by the customer (step 124) and connects to an available STS (step 126). The ISP server extracts_the customer identity according to the communication session details (step 127). The customer identity may be an ID number or a user name which is used by the ISP for identifying the customer.

The ISP server checks whether the customer confirmed the payment on the customer's transaction verification form (step 128). If the customer did not confirm payment on the transaction verification form, the ISP server informs the STS that the customer refused payment (step 130) and transfers control to step 124. If the customer confirmed the payment on the transaction verification form, the ISP server checks whether the customer is certified to pay through the STSP (step 132). If the customer is not certified to pay through the STSP, the ISP server informs the STS that the customer is not certified (step 133) and transfers control to step 124. If the customer is certified, the ISP server informs the STS that the payment is authorized and transfers the transaction details to the STS for verification (step 134). The ISP server then records the transaction details for billing the customer (step 136) and transfers control to step 124.

Many variations may be made to the structure and operations of the embodiment described above. Several of these other embodiments are described below. In general, much of the structure and many of the operations of the embodiments that follow are similar to corresponding structure and operations discussed above. Accordingly, the discussion below will generally focus on the distinctions between the embodiments and the embodiment described above.

In another preferred embodiment of the present invention, the network service provider provides the transaction verification form to the customer. Here, instead of using the secure transaction server to provide the form to the customer, the embodiment used the secure transaction server to send the necessary information to the network service provider to enable the network service provider to send the form.

After the initial communication between the customer computer station and the available STS is established as described hereinabove, the STS obtains the address of the ISP server from the database or table as disclosed hereinabove, using the automatically revealed IP address of the customer computer station. The STS then sends to the ISP server, the IP address of the customer computer station and the transaction details. The STS also causes the customer computer station to connect to the ISP server using the address of the ISP obtained by the STS from the database or table disclosed hereinabove and sent to the customer computer station. For example, this can be done by using the HTTP 302 Status Response accompanied by a "Location:" header. The ISP server first checks whether the customer is certified to pay through the STSP. If the customer is not certified to pay through the STSP, the ISP informs the STS that the customer is not certified. If the customer is certified to pay through the STSP, the ISP sends a transaction verification form to the customer computer station. It is noted that the information included in the transaction verification form is as disclosed hereinabove for the first preferred embodiment of the present invention. The customer then confirms or denies the transaction details and the other steps are, in general, performed as disclosed in detail hereinabove.

This embodiment performs similar operations as described in Figs. 2-5, with a few modifications. For example, at block 88 in Fig. 2, the customer receives the transaction from the ISP server, not the STS. At block 112 in Fig. 4, the STS sends the customer information to the ISP server instead of sending the transaction form to the customer. Before block 124 in Fig. 5, the ISP server would receive the customer information from the STS. In addition, the ISP server would send the transaction form to the customer.

In one embodiment of the invention, the customer interacts only with the STS during the verification form procedure. Here, the customer does not send a transaction confirmation/denial to the ISP server. Instead, the customer sends the confirmation/denial to the STS. To ensure that the customer is authorized to make the transaction, the STS obtains the identity of the customer from ISP server.

In general, many of the transaction operations performed according to this embodiment are similar to the operations discussed above. For example, the step of validating includes: Automatically receiving by the transaction server from the customer computer station of the transaction details and identification information for identifying the point of sale computer station and the network address of the customer computer station. Identifying the customer. Sending a transaction verification form from the transaction server to the customer computer station, the transaction verification form includes at least the transaction details. Entering by the customer in the transaction verification form a confirmation or a denial of the transaction details. Sending by the customer computer station the confirmation or the denial of the transaction details from the customer computer station to the transaction server. Instructing the point of sale computer station by the transaction server to supply or deny the goods to the customer in accordance with the confirmation or the denial, respectively, of the transaction details by the customer.

The steps of identifying the customer may include: Sending the customer computer station network address from the transaction server to the network service provider server. Finding the customer identity by the network service provider server. Using the customer computer station network address. Sending the customer identity from the network service provider server to the transaction server.

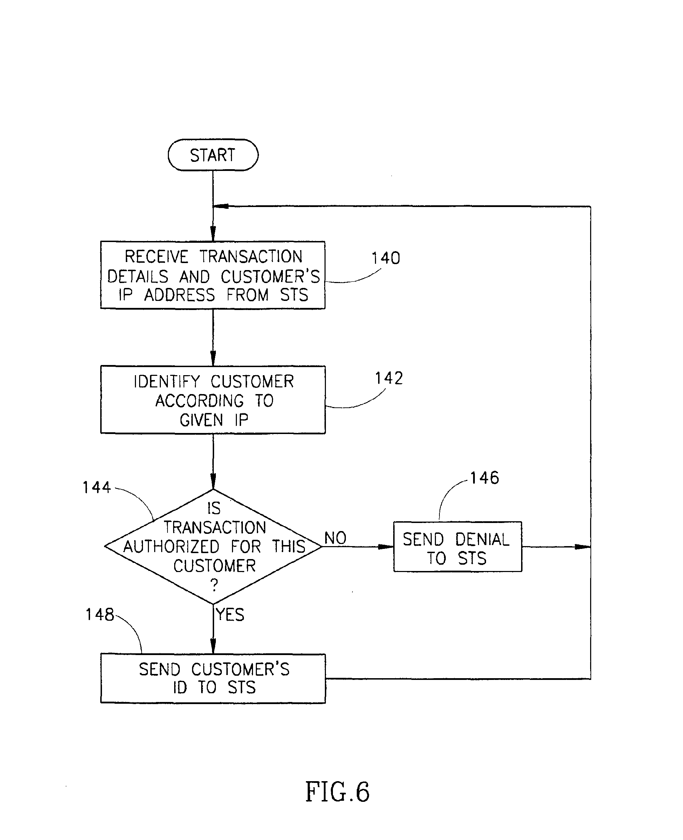

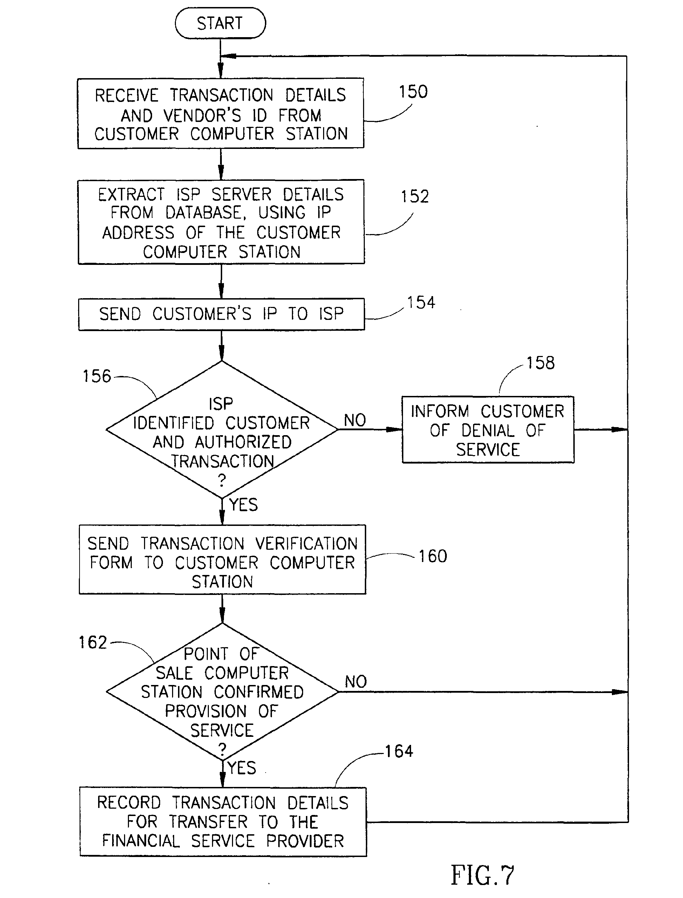

In this embodiment, the customer computer and the point of sale station perform similar operations as set forth in Figs. 2 and 3. The operation of the ISP server and the STS are set forth in Figs. 6 and 7, respectively.

In Fig. 6, the ISP server receives the transaction details and customer's IP address from the STS (step 140). Next, the ISP server identifies the customer according to the IP address (step 142). The customer identity may be, for example, an ID number or a user name which is used by the ISP for identifying the customer.

At step 144, if the customer can not carry out the transaction (for example, for reasons of an exhausted credit line), the ISP server informs the STS that the customer is not authorized (step 146) and transfers control to step 140. If no restrictions arise, the ISP server informs the STS that the payment is authorized, a customer identity (customer ID) is sent to the STS (step 148) and control is transferred back to step 140.

In Fig. 7, initially, the STS receives the transaction details and the point of sale computer station ID from the customer computer station (step 150). The STS then extracts the ISP server details from the database or table (as disclosed in detail hereinabove) using the IP address of the customer computer station which is received as part of the communication session details (step 152). Next, the STS sends the customer computer station IP address to the ISP server (step 154). At step 156, the STS determines whether the ISP server of the ISP which provides service to the customer identified the customer and confirmed the payment.

If the ISP server has not confirmed the payment, the STS connects to the point of sale computer station, instructs the point of sale computer station to deny goods from the customer and provides the point of sale computer station with the reason for the denial (step 158). The STS then transfers control to step 150.

If the ISP server confirms payment and sends the customer identification, the STS sends the transaction form to the customer (step 160). In addition, assuming the customer accepts the transaction, the STS connects to the point of sale computer station. Here, the STS instructs the point of sale computer station to supply the service or product to the customer and sends the transaction details to the point of sale computer station.

The STS may then determine whether the point of sale computer station confirmed that the goods were supplied (step 162). If the goods are tangible, the vendor's confirmation may include a confirmation that a mailing order for the purchased goods was processed.

If the point of sale computer station did not confirm that the goods were supplied, the STS transfers control back to step 150. If the point of sale computer station confirmed that the goods were supplied, the STS records the customer's identity information and transaction details for transfer to the financial service provider and ISP for later billing (step 164) and transfers control to step 150.

In another embodiment of the invention, the network service provider identifies the customer using the telephone number of the customer. The telephony infrastructure of most modern countries now supports the option to identify the initiating side of a telephone call (by transferring his phone number to the called party). The customer's telephone number may be supplied to an ISP, for example, over the telephone infrastructure when the customer calls the ISP. In those ISPs that support this caller identification feature, the phone number from which an ISP's client has connected together with the client's name and IP address may be registered and saved on the ISP's servers.

In accordance with this embodiment of the invention, the customer's telephone number may be used to identify the customer and/or to bill the customer's telephone account for the product the customer purchased from the vendor. Here, the ISP supplies the customer's phone number, according to his network address.

The customer's telephone number may be used to verify the identity of the caller. In one example the ISP (or STS) maintains a listing of authorized source telephone numbers for one or more of the customers. In this case, the system may deny access to the retail method when the customer identity information of the incoming call does not match the corresponding authorized telephone number. Thus, this technique may prevent fraudulent use of a customer's identity information from non-authorized telephones.

The customer's telephone number may be used to bill the customer. In one example, the STS, in cooperation with a telephone company, uses the phone number to bill the customer via his phone bill. In another example, the STS uses the phone number and/or other client information to bill an account of the client (for example, as previously discussed).

The process of identifying the customer includes the steps of sending the customer computer station network address from the transaction server to the network service provider server, finding the customer phone number by the network service provider server, using the customer computer station network address, and sending the customer phone number from the network service provider server to the transaction server.

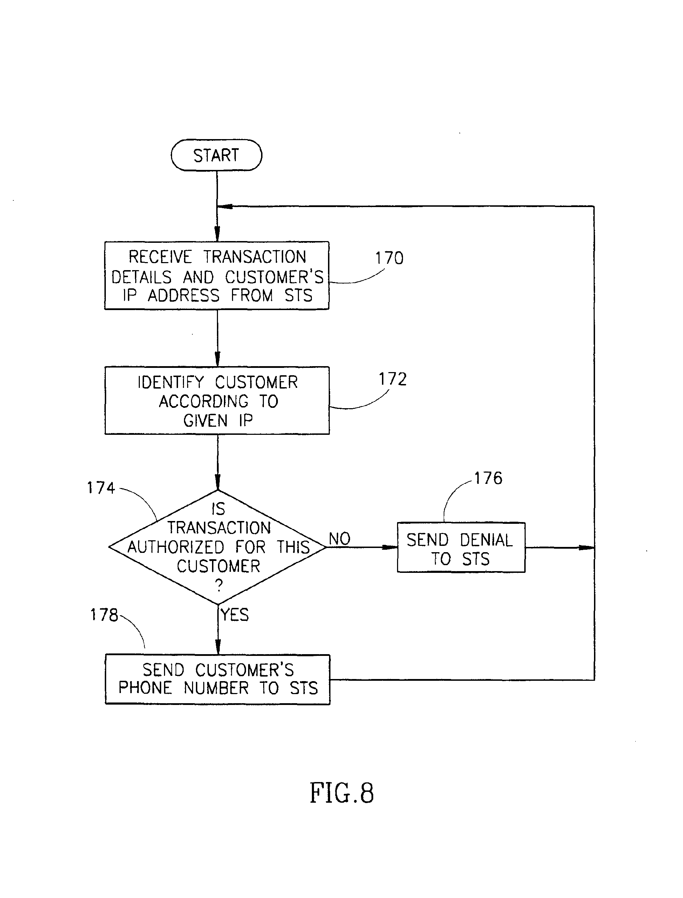

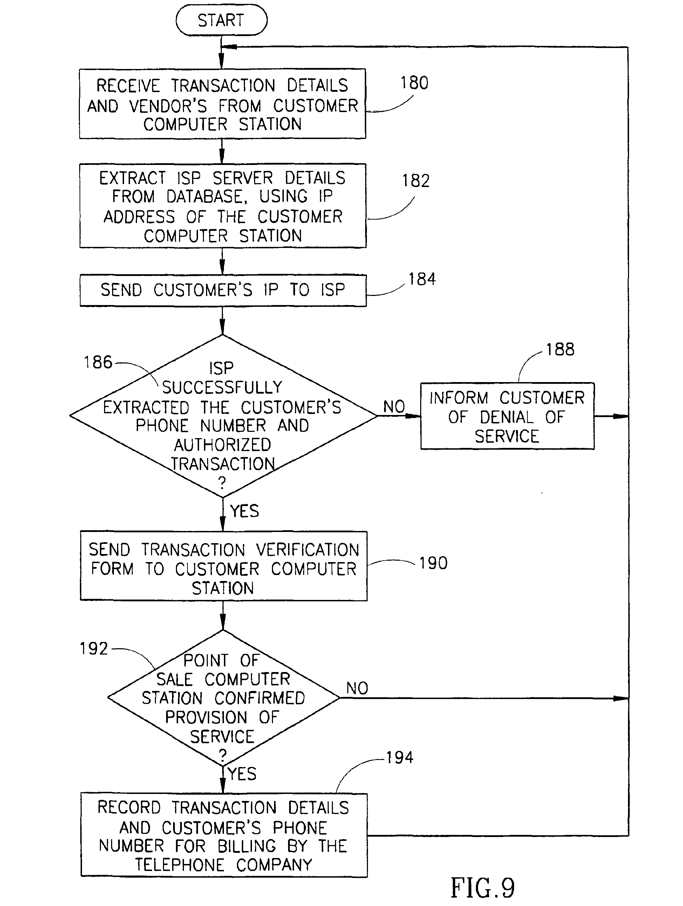

In general, many of the transaction operations performed according to this example are similar to the operations discussed above. For example, the customer computer and the point of sale station perform similar operations as set forth in Figs. 2 and 3. The operation of the ISP server and the STS are set forth in Figs. 8 and 9, respectively.

In Fig. 8, the ISP server receives the transaction details and customer's IP address from the STS (step 170). The ISP server identifies the customer and extracts the customer phone number according to the IP address (step 172). The customer phone number is the phone number from which the customer initiated the call to the ISP, as recorded by the ISP servers.

If, at step 174, the customer can not carry out the transaction (for example, for reasons of an exhausted credit line), the ISP server informs the STS that the customer is not authorized (step 176) and transfers control back to step 170. If no restrictions arise, the ISP server sends the customer's phone number to the STS, thus indicating authorization of the payment (step 178) and transfers control to step 170.

In Fig. 9, the STS receives the transaction details and the point of sale computer station ID from the customer computer station (step 180), extracts the ISP server details from the database or table as disclosed in detail hereinabove using the IP address of the customer computer station which is received as part of the communication session details (step 182). The STS sends the customer computer station IP address to the ISP server (step 184) and then checks whether the ISP server of the ISP which provides service to the customer successfully extracted the customer phone number and confirmed the payment (step 186).

If the ISP server has not confirmed the payment, the STS connects to the point of sale computer station, instructs the point of sale computer station to deny goods from the customer and provides the point of sale computer station with the reason for the denial (step 188). The STS then transfers control back to step 180.

If the ISP server confirms payment and sends the customer phone number, the STS sends the transaction form to the customer (step 190). In addition, assuming the customer accepts the transaction, the STS connects to the point of sale computer station. Here, the STS instructs the point of sale computer station to supply the service or product to the customer and sends the transaction details to the point of sale computer station.

The STS then checks whether the point of sale computer station confirmed that the goods were supplied (step 192). Again, if the goods are tangible, the vendor's confirmation may include a confirmation that a mailing order for the purchased goods was processed.

If the point of sale computer station did not confirm that the goods were supplied, the STS transfers control back to step 180. If the point of sale computer station confirmed that the goods were supplied, the STS records the customer's phone number and transaction details for transfer to the financial service provider and telephone company for later billing (step 194) and transfers control to step 180.

In another example of the invention, the STS, rather than the ISP server, determines the identity of the customer. Much of the ISP equipment relevant to the embodiments described herein consists of access servers and authentication servers. The access servers are responsible for answering incoming calls from users' computers, receiving a username and password and supplying network services. The authentication servers are responsible for verifying the username and password (as given by the access server) and instructing the access server whether to supply the required network service to the user. Both servers usually register all accesses and operations.

In accordance with this example of the invention, the secure transaction service connects directly to the network service provider access server or authentication server or any other relevant server capable of associating the customer computer station network address with the customer identity or phone number or any other information relevant for billing the customer. The STS may then retrieve some or all of the stored information that identifies the customer. For example, the STS may extract the customer's username, phone number, IP address or any other relevant data from the ISP's servers. This may be accomplished, for example, using an SNMP command. A significant advantage of this example is that it may be implemented without installing the software module at the ISP.

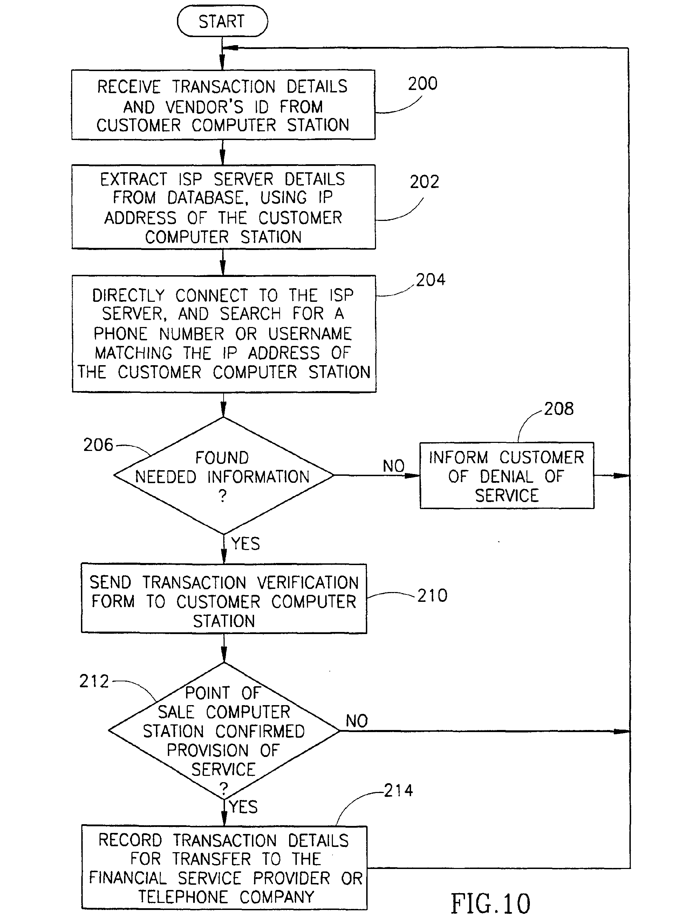

The customer computer and the point of sale server perform similar operations as set forth in Figs. 2 and 3. No special operations are required of the ISP. The operation of the STS is set forth in Fig. 10.

In Fig. 10, the STS receives the transaction details and the point of sale computer station ID from the customer computer station (step 200), extracts the ISP server details from the database or table as disclosed in detail hereinabove, using the IP address of the customer computer station which is received as part of the communication session details (step 202). Then, at step 204, the STS connects directly to the ISP server (such as an access server or an authentication server) containing information associating IP addresses with identification information (such as usernames or telephone numbers).

If, at step 206, the identification information is not found on the ISP server, the STS connects to the point of sale computer station, instructs the point of sale computer station to deny goods from the customer and provides the point of sale computer station with the reason for the denial (step 208). The STS then transfers control back to step 200.

If the identification information is found on the ISP server, the STS sends the transaction form to the customer (step 210). In addition, assuming the customer accepts the transaction, the STS connects to the point of sale computer station. Here, the STS instructs the point of sale computer station to supply the service or product to the customer and sends the transaction details to the point of sale computer station.

The STS then checks whether the point of sale computer station confirmed that the goods were supplied (step 212). Again, if the goods are tangible, the vendor's confirmation may include a confirmation that a mailing order for the purchased goods was processed.

If the point of sale computer station did not confirm that the goods were supplied, the STS transfers control to step 200. If the point of sale computer station confirmed that the goods were supplied, the STS records the customer's identification information and transaction details for transfer to the financial service provider and/or telephone company and/or ISP for later billing (step 214) and transfers control to step 200.

In practice, the system or method of the invention may be practiced in conjunction with customer's who use proxy servers. In this case, the proxy server's Internet address, rather than the customer's Internet address, may be provided to the STS or the ISP server. Several methods may be used to obtain a customer's actual network address in the event the customer is using a proxy server. For example, the address may be obtained from an HTTP "Forwarded-For" header that may be sent. Here, the header will reveal the customer's address. It should be noted, however, that this method may be easily compromised (i.e., false addresses inserted into the header). As a result, the use of this method may be restricted to verification operations in some applications.

The customer's address may be obtained by instructing the customer's browser to connect in the background to another service, which the customer might have requested to be unproxied, such as HTTPS. This can be done, for example, by using an HTML tag such as <img src=https://host:port/url>.

The address may be obtained by instructing the customer's browser to connect in the background to another host, which the customer might have requested to be unproxied, such as hosts from the domain of his ISP. This can be done, for example, by using an HTML tag such as <img src=https:/lhost.isp.com:port/url> (assuming the domain isp.com was configured as unproxied on the customer's computer).

Finally, an application that will attempt to contact the secure transaction service or the network service provider may be downloaded to the customer's computer station. This would cause the customer's true Internet address to be disclosed. This could be done, for example, by instructing the browser to download a Java applet that instructs the customer's computer to connect directly to the STS thereby revealing the computer's true address.

In each case, a large random number is sent from the STS to the customer computer station, and is then sent back from the customer computer station to the STS over the newly established connection. This can be done for example, by inserting the said number in the URL of the said HTML tag, or by instructing the said application to echo the said large number when received. This procedure verifies that the reported IP is known by the Internet infrastructure and further reduces the possibility of fraud.

Further to the above, it is noted that communication between the point of sale computer station and the STS and between the ISP server and the STS can be secured communication. The communication can be secured using a method of encryption such as the data encryption standard (DES) or any other suitable encryption method. A method of authentication can also be used for increased security such as a public key or shared key digital signature method or any other suitable authentication method. This ensures that the transaction verification procedures serve as an encrypted secured verification step and reduces the possibility of fraud.

It should be noted that any communication between two parties could in fact be done through a third party. For example, the final confirmation sent from the STS to the vendor could be transferred through the customer. In this case, some method of digital signature could be added to the message in order to protect it from accidental or malicious modification.

It is further noted that the retail method of the present invention has the advantage that a vendor needs only establish one agreement with an STSP in order to be able to provide a secure payment method to all the customers of all the ISPs which are connected with the STSP. Another advantage of the STSP method is that an ISP needs to establish only one agreement with the STSP in order to provide a secure payment method between any one of its customers and any of the vendors that have agreements with the STSP, thus, the ISP does not need to establish separate agreements with many vendors.

Another advantage of the retail method of the present invention is that the customer can perform secured transactions with all the vendors which have agreements with the STSP, without having to install any software on his computer station.

Moreover, using the retail method of the present invention, the customer can perform transactions without having to transmit any sensitive information such as a credit card or account number or other personal details over the Internet.

It is noted that, in accordance with another example of the present invention, no billing is performed by the STS, the ISP or the financial service provider. Instead, the ISP sends to the STS the e-mail address of the customer and the STS periodically sends e-mail messages to the customer reminding the customer of his debt to the vendor from which the goods were received until the vendor informs the STS that the debt has been paid.

Alternatively, in accordance with another example of the present invention, the STS instructs the ISP to periodically send e-mail messages to the customer reminding the customer of his debt to the vendor from which the goods were received. When the vendor informs the STS that the debt has been paid, the STS instructs the ISP to stop sending the e-mail messages to the customer.

It is still further noted that, in accordance with another example of the present invention, the vendor may decide to supply the goods to the customer prior to validating the purchasing as disclosed hereinabove. In a non-limiting example, the vendor may provide the customer with access to a database and if the customer finds the information useful, the customer agrees to pay for the information, for example by activating a designated HTML link. The link connects the customer computer station to the STS, transfers the ID of the point of sale computer station and the transaction details to the STS as disclosed in step 110 of Fig. 4 and continues with the other steps of Fig. 4 as disclosed hereinabove.

In another non-limiting example, the customer downloads software from the point of sale computer station for checking the software prior to performing step 80 of Fig. 2. If the customer decides to pay for the software, the customer connects to the point of sale computer station and performs steps 80 to 94 (Fig. 2) as disclosed hereinabove. It is noted that, in the last example, step 96 is not performed since the software was already downloaded to the customer computer station.

## Claims

1. A method of performing a commercial transaction using a secure transaction server (21, 22, 23), wherein a customer uses a customer computer station (51, 52) that is connected to a network (10) via a network service provider (31) to establish a connection with a vendor application that runs on a point of sale computer (41, 42, 43) that is connected to the network, the method comprising:
the secure transaction server receiving from the customer computer station transaction data relating to a request by the customer computer station for purchase of goods or services offered by the point of sale computer, said transaction data being conveyed transparently to the customer computer station by the point of sale computer and containing an address of the secure transaction server for allowing the customer computer station to connect to the secure transaction server;
the secure transaction server upon connecting to the customer computer station, extracting a network address of the customer computer station;
the secure transaction server identifying an address of the network service provider using the network address of the customer computer station;
the secure transaction server connecting to the network service provider and obtaining from the network service provider a customer identity information corresponding to the network address of the customer computer station;
the secure transaction server conveying to the customer computer station details of the transaction for verification by the customer;
the secure transaction server upon receiving verification from the customer, obtaining from the network service provider confirmation that the customer is certified to effect the requested transaction; and
if the customer is certified to effect the requested transaction, the secure transaction server providing transaction authorization to the vendor application to provide said goods or services and mediating payment therefor.

2. A method of performing a commercial transaction using a secure transaction server (21, 22, 23), wherein a customer uses a customer computer station (51, 52) that is connected to a network (10) via a network service provider (31) to establish a connection with a vendor application that runs on a point of sale computer (41, 42, 43) that is connected to the network, the method comprising:
the secure transaction server receiving from the customer computer station transaction data relating to a request by the customer computer station for purchase of goods or services offered by the point of sale computer, said transaction data being conveyed transparently to the customer computer station by the point of sale computer and containing an address of the secure transaction server for allowing the customer computer station to connect to the secure transaction server;
the secure transaction server upon connecting to the customer computer station, extracting a network address of the customer computer station;
the secure transaction server identifying an address of the network service provider using the network address of the customer computer station;
the secure transaction server connecting to the network service provider and obtaining from the network service provider a customer identity information corresponding to the network address of the customer computer station;
the network service provider checking whether the customer is certified to pay through the secure transaction server and if the customer is certified to pay through the secure transaction server the network service providerconveying to the customer computer station details of the transaction for verification by the customer; and
if the customer is certified to effect the requested transaction, the secure transaction server providing transaction authorization to the vendor application to provide said goods or services and mediating payment therefor.

3. The method according to claim 1 or 2, wherein the customer identity information is one or more of:
(a) caller identification information;
(b) a physical communication port ID persistently associated with the hardware the customer uses to connect to the network;
(c) an ID associated with the user by the network service provider.

4. The method according to claim 1, 2 or 3, wherein extracting a network address of the customer computer station includes associating the customer identity information with one or more of:
(a) a financial account;
(b) billing account of the customer that is associated with the caller identification information;
(c) credit or debit card;
(d) a billing number at the network provider.

5. The method according to claim 1, 2 or 3, wherein extracting a network address of the customer computer station further includes any one or more of the following:
(a) obtaining identity information associated with an IP address of the customer computer station from the network service provider;
(b) obtaining an IP address of the customer computer station from an HTTP "Forwarded-For" header;
(c) obtaining an IP address of the customer computer station by instructing a browser of the customer computer station to connect in the background to an unproxied service or host;
(d) obtaining an IP address of the customer computer station by downloading an application on the customer computer station for contacting the transaction service or the network service provider;
(e) obtaining a true IP address of the customer computer station in the event the customer computer station uses a proxy.

6. The method according to any one of claims 1 to 5, wherein obtaining from the network service provider confirmation that the customer is certified to effect the requested transaction includes determining whether the customer is authorized to conduct the transaction.

7. The method according to any one of claims 1 to 5, wherein obtaining from the network service provider confirmation that the customer is certified to effect the requested transaction comprises validating financial capability of the customer to pay for the transaction.

8. The method according to any one of claims 1 to 7, wherein extracting a network address of the customer computer station includes associating customer identity information with at least one of two or more accounts that the customer has with the network service provider.

9. The method according to any one of claims 1 to 8, wherein mediating payment comprises:
debiting a customer account that is associated with the customer; and
crediting a vendor account that is associated with the vendor.

10. The method according to any one of claims 1 to 8, wherein mediating payment includes one of the following:
(a) charging of a financial account via a financial service provider;
(b) billing against an account associated with a telecommunication service provider;
(c) charging of a credit card or a debit card;
(d) billing against an account associated with the customer at the network provider.

11. The method according to any one of claims 1 to 10, including:
the secure transaction server establishing at least one billing agreement with the vendor;
the secure transaction server establishing at least one billing agreement with the network service provider (31); and
remitting payment in accordance with the billing agreements.

12. The method according to any one of claims 1 to 11, wherein said network service provider (31) is one of a plurality of an Internet service providers (31, 32, 33) and wherein said customer identity information includes at least an IP address space of said Internet service provider and technical information needed to contact said Internet service provider.

13. The method according to any one of claims 1 to 12, including deferring billing of the user account to a later date.

14. The method according to claim 13, including billing multiple transactions.

15. The method according to any one of claims 1 to 14, further including encrypting communication by the secure transaction server with the point of sale computer station (41, 42, 43) and with the network service provider server (31, 32, 33).

16. The method according to claim 11, wherein the at least one billing agreement with the network service provider (31, 32, 33) relates to billing an account of said customer against a cost of said transaction.

17. The method according to claim 11, wherein remitting payment comprises crediting an account of said vendor by at least a portion of a cost associated with said transaction.

18. The method according to claim 17, wherein crediting comprises instructing a financial service provider to effect payment.

19. The method according to claim 18, wherein said financial service provider is selected from the group consisting of a bank and a credit card company.

20. The method according to claim 9, wherein said vendor account is a bank account or a credit card account.

21. The method according to claim 9, including deferring crediting of the vendor account to a later date.

22. The method according to claim 21, including crediting the vendor account in respect of multiple transactions.

23. The method according to claim 5, wherein the customer computer station (51, 52) is configured to use a proxy for selected services or hosts only and obtaining an IP address of the customer computer station includes:
instructing a browser of the customer computer station to open a connection to a service or host that does not require use of a proxy; and
obtaining the IP address of the customer computer station via said connection.

24. The method according to claim 5, wherein obtaining an IP address of the customer computer station (51, 52) includes:
activating an application on said customer computer station for opening a connection to a server, and
obtaining the IP address of the customer computer station via said connection.

## Patentansprüche

1. Ein Verfahren zur Ausführung eines Handelsgeschäfts, das einen sicheren Transaktionsserver (21, 22, 23) verwendet, wobei ein Kunde eine Kunden-Rechnerstation (51, 52) verwendet, die über einen Netzwerkdienstleister (31) an ein Netzwerk (10) angeschlossen ist, um eine Verbindung mit einer Verkäuferanwendung herzustellen, die auf einem Verkaufsstellencomputer (41, 42, 43) läuft, der an ein Netzwerk angeschlossen ist, wobei das Verfahren Folgendes umfasst:
der sichere Transaktionsserver empfängt von der Kunden-Rechnerstation Transaktionsdaten in Bezug auf die Anfrage durch die Kunden-Rechnerstation für den Kauf von Waren oder Dienstleistungen, die vom Verkaufsstellen-Computer angeboten werden, besagte Transaktionsdaten werden vom Verkaufsstellen-Computer transparent an die Kunden-Rechnerstation übermittelt und enthalten eine Adresse des sicheren Transaktionsservers, um der Kunden-Rechnerstation die Verbindung mit dem sicheren Transaktionsserver zu ermöglichen;
der sichere Transaktionsserver extrahiert bei der Verbindung mit der Kunden-Rechnerstation eine Netzwerkadresse der Kunden-Rechnerstation;
der sichere Transaktionsserver identifiziert durch die Verwendung der Netzwerkadresse der Kunden-Rechnerstation eine Adresse des Netzwerkdienstleisters;
der sichere Transaktionsserver verbindet sich mit dem Netzwerkdienstleister und erhält vom Netzwerkdienstleister eine Kundenidentitätsinformation, die der Netzwerkadresse der Kunden-Rechnerstation entspricht;
der sichere Transaktionsserver übermittelt an die Kunden-Rechnerstation Einzelheiten über die Transaktion zur Überprüfung durch den Kunden;
der sichere Transaktionsserver erhält nach Empfang der Überprüfung durch den Kunden vom Netzwerkdienstleister die Bestätigung, dass der Kunde für die Ausführung der angeforderten Transaktion zertifiziert ist; und
wenn der Kunde für die Ausführung der angeforderten Transaktion zertifiziert ist, erteilt der sichere Transaktionsserver eine Transaktionsgenehmigung an die Verkäuferanwendung für die Bereitstellung der besagten Waren oder Dienstleistungen und die Vermittlung einer Zahlung.

2. Ein Verfahren zur Ausführung eines Handelsgeschäfts, das einen sicheren Transaktionsserver (21, 22, 23) verwendet, wobei ein Kunde eine Kunden-Rechnerstation (51, 52) verwendet, die über einen Netzwerkdienstleister (31) an ein Netzwerk (10) angeschlossen ist, um eine Verbindung mit einer Verkäuferanwendung herzustellen, die auf einem Verkaufsstellencomputer (41, 42, 43) läuft, der an ein Netzwerk angeschlossen ist, wobei das Verfahren Folgendes umfasst:
der sichere Transaktionsserver empfängt von der Kunden-Rechnerstation Transaktionsdaten in Bezug auf die Anfrage durch die Kunden-Rechnerstation für den Kauf von Waren oder Dienstleistungen, die vom Verkaufsstellen-Computer angeboten werden, besagte Transaktionsdaten werden vom Verkaufsstellen-Computer transparent an die Kunden-Rechnerstation übermittelt und enthalten eine Adresse des sicheren Transaktionsservers, um der Kunden-Rechnerstation die Verbindung mit dem sicheren Transaktionsserver zu ermöglichen;
der sichere Transaktionsserver extrahiert bei der Verbindung mit der Kunden-Rechnerstation eine Netzwerkadresse der Kunden-Rechnerstation;
der sichere Transaktionsserver identifiziert eine Adresse des Netzwerkdienstleisters durch die Nutzung der Netzwerkadresse der Kunden-Rechnerstation;
der sichere Transaktionsserver verbindet sich mit dem Netzwerkdienstleister und erhält vom Netzwerkdienstleister eine Kundenidentitätsinformation, die der Netzwerkadresse der Kunden-Rechnerstation entspricht;
der Netzwerkdienstleister prüft, ob der Kunde zertifiziert ist, um über den sicheren Transaktionsserver zu zahlen und wenn der Kunde zertifiziert ist, um über den sicheren Transaktionsserver zu zahlen, übermittelt der Netzwerkdienstleister der Kunden-Rechnerstation Einzelheiten über die Transaktion, damit der Kunde diese überprüfen kann; und
wenn der Kunde für die Ausführung der angeforderten Transaktion zertifiziert ist, erteilt der sichere Transaktionsserver eine Transaktionsgenehmigung an die Verkäuferanwendung für die Bereitstellung der besagten Waren oder Dienstleistungen und die Vermittlung einer Zahlung.

3. Verfahren nach Anspruch 1 oder 2, wobei die Kundenidentitätsinformation eines oder mehrere der folgenden Elemente ist:
(a) Information der Rufnummernüberprüfung;
(b) eine physikalische Kommunikationsschnittstellen-Kennung, die beständig mit der Hardware verbunden ist, mit der sich der Kunde mit dem Netzwerk verbindet;
(c) eine Kennung, die vom Netzwerkdienstleister mit dem Kunden in Verbindung gebracht wird.

4. Verfahren nach Anspruch 1, 2 oder 3, wobei die Extraktion einer Netzwerkadresse von der Kunden-Rechnerstation beinhaltet, dass die Kundenidentitätsinformation mit einem mehreren der folgenden Elemente in Verbindung gebracht wird:
(a) einem Finanzkonto;
(b) Abrechnungskonto des Kunden, das mit der Information zur Rufnummernüberprüfung in Verbindung gebracht wird;
(c) Kredit- oder Kundenkarte;
(d) einer Abrechnungsnummer beim Netzwerkdienstleister.

5. Verfahren nach Anspruch 1, 2 oder 3, wobei die Extraktion einer Netzwerkadresse von der Kunden-Rechnerstation weiterhin eines oder mehrere der folgenden Elemente beinhaltet:
(a) Erhalt einer Identitätsinformation vom Netzwerkdienstleister, die mit der IP-Adresse der Kunden-Rechnerstation in Verbindung gebracht wird;
(b) Erhalt einer IP-Adresse der Kunden-Rechnerstation von einem HTTP "Forwarded-For" Header;
(c) Erhalt einer IP-Adresse der Kunden-Rechnerstation durch die Anweisung eines Browsers der Kunden-Rechnerstation, sich im Hintergrund mit einem Unproxied-Service oder einem Host zu verbinden;
(d) Erhalt einer IP-Adresse der Kunden-Rechnerstation durch das Herunterladen einer Anwendung auf die Kunden-Rechnerstation, um den Transaktionsservice oder den Netzwerkdienstleister zu kontaktieren;
(e) Erhalt einer wahren IP-Adresse der Kunden-Rechnerstation, für den Fall dass die Kunden-Rechnerstation einen Proxy verwendet.

6. Verfahren nach einem der Ansprüche 1 bis 5, wobei der Erhalt der Bestätigung durch den Netzwerkdienstleister, dass der Kunde für die Ausführung der angeforderten Transaktion zertifiziert ist, die Ermittlung beinhaltet, ob der Kunde zur Durchführung der angeforderten Transaktion berechtigt ist.

7. Verfahren nach einem der Ansprüche 1 bis 5, wobei der Erhalt der Bestätigung durch den Netzwerkdienstleister, dass der Kunde für die Ausführung der angeforderten Transaktion zertifiziert ist, die Validierung der Finanzkraft des Kunden umfasst, die Transaktion zahlen zu können.

8. Verfahren nach einem der Ansprüche 1 bis 7, wobei die Extraktion einer Netzwerkadresse von der Kunden-Rechnerstation beinhaltet, dass die Kundenidentitätsinformation mit mindestens einem von zwei oder mehreren Konten in Verbindung gebracht wird, die der Kunde beim Netzwerkdienstleister besitzt.

9. Verfahren nach einem der Ansprüche 1 bis 8, wobei die Zahlungsvermittlung beinhaltet:
Belastung eines Kundenkontos, das mit dem Kunden in Verbindung gebracht wird; und die Gutschrift auf einem Verkäuferkonto, das mit dem Verkäufer in Verbindung gebracht wird.

10. Verfahren nach einem der Ansprüche 1 bis 8, wobei die Zahlungsvermittlung eines der folgenden Elemente beinhaltet:
(a) Belastung eines Finanzkontos über einen Finanzdienstleister;
(b) Verrechnung mit einem Konto, das mit einem Telekommunikationsdienstleister in Verbindung gebracht wird;
(c) Belastung einer Kreditkarte oder einer Kundenkarte;
(d) Verrechnung mit einem Konto, das mit dem Kunden bei dem Netzwerkdienstleister in Verbindung gebracht wird;

11. Verfahren nach einem der Ansprüche 1 bis 10, das Folgendes beinhaltet:
der sichere Transaktionsserver erstellt mindestens eine Abrechnungsvereinbarung mit dem Verkäufer;
der sichere Transaktionsserver erstellt mindestens eine Abrechnungsvereinbarung mit dem Netzwerkdienstleister (31); und
Leistung der Zahlung in Übereinstimmung mit der Abrechnungsvereinbarung.

12. Verfahren nach einem der Ansprüche 1 bis 11, wobei der besagte Netzwerkdienstleister (31) einer von vielen Internetdienstleistern (31, 32, 33) ist und wobei die besagte Kundenidentitätsinformation mindestens einen IP-Adressraum des besagten Internetdienstleisters und eine technische Information beinhaltet, die zum Kontakt mit dem besagten Internetdienstleister benötigt wird.

13. Verfahren nach einem der Ansprüche 1 bis 12, das den Aufschub der Verrechnung mit dem Kundenkonto auf ein späteres Datum beinhaltet.

14. Verfahren nach Anspruch 13, das die Verrechnung mehrerer Transaktionen beinhaltet.

15. Verfahren nach einem der Ansprüche 1 bis 14, das weiterhin die Verschlüsselung der Kommunikation durch den sicheren Transaktionsserver mit dem Verkaufsstellencomputer (41, 42, 43) und dem Server des Netzwerkdienstleisters (31, 32, 33) beinhaltet.

16. Verfahren nach Anspruch 11, wobei mindestens eine Abrechnungsvereinbarung mit dem Netzwerkdienstleister (31, 32, 33) die Verrechnung mit einem Konto des besagten Kunden gegen die Kosten der besagten Transaktion betrifft.

17. Verfahren nach Anspruch 11, wobei die Leistung der Zahlung die Gutschrift auf einem Konto des besagten Verkäufers mit mindestens einem Anteil der Kosten umfasst, die mit der besagten Transaktion verbunden sind.

18. Verfahren nach Anspruch 17, wobei die Gutschrift die Anweisung eines Finanzdienstleisters umfasst, die Zahlung zu auszuführen.

19. Verfahren nach Anspruch 18, wobei der besagte Finanzdienstleister aus der Gruppe auszuwählen ist, die aus einer Bank und einem Kreditkartenunternehmen besteht.

20. Verfahren nach Anspruch 9, wobei das besagte Verkäuferkonto ein Bankkonto oder ein Kreditkartenkonten ist.

21. Verfahren nach Anspruch 9, das den Aufschub der Gutschrift auf dem Verkäuferkonto auf ein späteres Datum beinhaltet.

22. Verfahren nach Anspruch 21, das die Gutschrift auf dem Verkäuferkonto bezüglich mehrerer Transaktionen beinhaltet.

23. Verfahren nach Anspruch 5, wobei die Kunden-Rechnerstation (51, 52) so konfiguriert ist, dass sie nur für ausgewählte Services und Hosts einen Proxy nutzt und der Erhalt einer IP-Adresse der Kunden-Rechnerstation Folgendes beinhaltet:
Anweisung eines Browsers der Kunden-Rechnerstation eine Verbindung zu einem Service oder Host herzustellen, für die die Nutzung eines Proxys nicht notwendig ist; und
Erhalt der IP-Adresse der Kunden-Rechnerstation über die besagte Verbindung.

24. Verfahren nach Anspruch 5, wobei der Erhalt einer IP-Adresse der Kunden-Rechnerstation (51, 52) Folgendes beinhaltet:
Aktivierung einer Anwendung auf der besagten Kunden-Rechnerstation, um eine Verbindung zu einem Server herzustellen; und
Erhalt der IP-Adresse von der Kunden-Rechnerstation über die besagte Verbindung.

## Revendications

1. Procédé d'exécution d'une transaction commerciale en utilisant un serveur de transaction sécurisé (21, 22, 23), dans lequel un client utilise une station informatique de client (51, 52) qui est connectée à un réseau (10) par l'intermédiaire d'un fournisseur de services de réseau (31) pour établir une connexion avec une application de vendeur qui s'exécute sur un ordinateur de point de vente (41, 42, 43) qui est connecté au réseau, le procédé consistant en ce que :
le serveur de transaction sécurisé reçoit, de la station informatique de client, des données de transaction concernant une demande de la station informatique de client d'acheter des marchandises ou des services offerts par l'ordinateur de point de vente, lesdites données de transaction étant transportées de manière transparente vers la station informatique de client par l'ordinateur de point de vente et contenant une adresse du serveur de transaction sécurisé pour permettre à la station informatique de client de se connecter au serveur de transaction sécurisé ;
le serveur de transaction sécurisé, lors de la connexion à la station informatique de client, extrait une adresse de réseau de la station informatique de client ;
le serveur de transaction sécurisé identifie une adresse du fournisseur de services de réseau en utilisant l'adresse de réseau de la station informatique de client ;
le serveur de transaction sécurisé se connecte au fournisseur de services de réseau et obtient, du fournisseur de services de réseau, des informations d'identité de client correspondant à l'adresse de réseau de la station informatique de client ;
le serveur de transaction sécurisé achemine, vers la station informatique de client, les détails de la transaction pour une vérification par le client ;
le serveur de transaction sécurisé, lors de la réception de la vérification du client, obtient du fournisseur de services de réseau la confirmation que le client est certifié pour effectuer la transaction demandée ; et
si le client est certifié pour effectuer la transaction demandée, le serveur de transaction sécurisé fournit une autorisation de transaction à l'application de vendeur pour fournir lesdites marchandises ou lesdits services et arbitre un paiement pour ceux-ci.

2. Procédé d'exécution d'une transaction commerciale en utilisant un serveur de transaction sécurisé (21, 22, 23), dans lequel un client utilise une station informatique de client (51, 52) qui est connectée à un réseau (10) par l'intermédiaire d'un fournisseur de services de réseau (31) pour établir une connexion avec une application de vendeur qui s'exécute sur un ordinateur de point de vente (41, 42, 43) qui est connecté au réseau, le procédé consistant en ce que :
le serveur de transaction sécurisé reçoit, de la station informatique de client, des données de transaction concernant une demande de la station informatique de client d'acheter des marchandises ou des services offerts par l'ordinateur de point de vente, lesdites données de transaction étant transportées de manière transparente vers la station informatique de client par l'ordinateur de point de vente et contenant une adresse du serveur de transaction sécurisé pour permettre à la station informatique de client de se connecter au serveur de transaction sécurisé ;
le serveur de transaction sécurisé, lors de la connexion à la station informatique de client, extrait une adresse de réseau de la station informatique de client ;
le serveur de transaction sécurisé identifie une adresse du fournisseur de services de réseau en utilisant l'adresse de réseau de la station informatique de client ;
le serveur de transaction sécurisé se connecte au fournisseur de services de réseau et obtient, du fournisseur de services de réseau, des informations d'identité de client correspondant à l'adresse de réseau de la station informatique de client ;
le fournisseur de services de réseau vérifie si le client est certifié pour payer par l'intermédiaire du serveur de transaction sécurisé et, si le client est certifié pour payer par l'intermédiaire du serveur de transaction sécurisé, le fournisseur de services de réseau achemine, vers la station informatique de client, les détails de la transaction pour une vérification par le client ; et
si le client est certifié pour effectuer la transaction demandée, le serveur de transaction sécurisé fournit une autorisation de transaction à l'application de vendeur pour fournir lesdites marchandises ou lesdits services et arbitre un paiement pour ceux-ci.

3. Procédé selon la revendication 1 ou 2, dans lequel les informations d'identité de client sont l'une ou plusieurs :
(a) d'informations d'identification d'appelant;
(b) d'un identifiant de port de communication physique associé de manière permanente au matériel que le client utilise pour se connecter au réseau ;
(c) d'un identifiant associé à l'utilisateur par le fournisseur de services de réseau.

4. Procédé selon la revendication 1, 2 ou 3, dans lequel l'extraction d'une adresse de réseau de la station informatique de client comprend l'association des informations d'identité de client avec l'un ou plusieurs :
(a) d'un compte financier ;
(b) d'un compte d'imputation du client qui est associé aux informations d'identification d'appelant ;
(c) d'une carte de crédit ou de débit ;
(d) d'un numéro d'imputation au niveau du fournisseur de réseau.

5. Procédé selon la revendication 1, 2 ou 3, dans lequel l'extraction d'une adresse de réseau de la station informatique de client comprend en outre l'une quelconque ou plusieurs des actions qui suivent :
(a) d'obtention d'informations d'identité associées à une adresse IP de la station informatique de client auprès du fournisseur de services de réseau ;
(b) d'obtention d'une adresse IP de la station informatique de client à partir d'un en-tête "Forwarded-For" HTTP ;
(c) d'obtention d'une adresse IP de la station informatique de client en ordonnant à un navigateur de la station informatique de clients de se connecter en arrière-plan à un service ou à un hôte sans serveur mandataire ;
(d) d'obtention d'une adresse IP de la station informatique de client en téléchargeant une application sur la station informatique de client pour contacter le service de transaction ou le fournisseur de services de réseau ;
(e) d'obtention d'une adresse IP vraie de la station informatique de client dans le cas où la station informatique de client utilise un serveur mandataire.

6. Procédé selon l'une quelconque des revendications 1 à 5, dans lequel l'obtention auprès du fournisseur de services de réseau d'une confirmation que le client est certifié pour effectuer la transaction demandée comprend la détermination si le client est autorisé à effectuer la transaction.

7. Procédé selon l'une quelconque des revendications 1 à 5, dans lequel l'obtention auprès du fournisseur de services de réseau d'une confirmation que le client est certifié pour effectuer la transaction demandée comprend la validation de la capacité financière du client à payer la transaction.

8. Procédé selon l'une quelconque des revendications 1 à 7, dans lequel l'extraction d'une adresse de réseau de la station informatique de client comprend l'association des informations d'identité de client avec au moins l'un de deux comptes ou plus que le client a avec le fournisseur de services de réseau.

9. Procédé selon l'une quelconque des revendications 1 à 8, dans lequel l'arbitrage du paiement comprend :
le retrait de la somme d'un compte de client qui est associé au client ; et
le versement de la somme sur un compte de vendeur qui est associé au vendeur.

10. Procédé selon l'une quelconque des revendications 1 à 8, dans lequel l'arbitrage du paiement comprend l'une des actions qui suivent :
(a) la facturation sur un compte financier par l'intermédiaire d'un fournisseur de service financier ;
(b) l'imputation à un compte associé à un fournisseur de service de télécommunication ;
(c) la facturation sur une carte de crédit ou une carte de débit ;
(d) l'imputation à un compte associé au client au niveau du fournisseur de réseau.

11. Procédé selon l'une quelconque des revendications 1 à 10, consistant en ce que :
le serveur de transaction sécurisé établit au moins un agrément d'imputation avec le vendeur ;
le serveur de transaction sécurisé établit au moins un agrément d'imputation avec le fournisseur de services de réseau (31) ; et
le paiement est reporté conformément aux agréments d'imputation.

12. Procédé selon l'une quelconque des revendications 1 à 11, dans lequel ledit fournisseur de services de réseau (31) est l'un d'une pluralité de fournisseurs de services Internet (31, 32, 33) et dans lequel lesdites informations d'identité de client comprennent au moins un espace d'adresses IP dudit fournisseur de services Internet et des informations techniques nécessaires pour contacter ledit fournisseur de services Internet.

13. Procédé selon l'une quelconque des revendications 1 à 12, consistant à différer l'imputation du compte d'utilisateur à une date ultérieure.

14. Procédé selon la revendication 13, comprenant l'imputation de multiples transactions.

15. Procédé selon l'une quelconque des revendications 1 à 14, comprenant en outre le chiffrement d'une communication par le serveur de transaction sécurisé avec la station informatique de point de vente (41, 42, 43) et avec le serveur de fournisseur de services de réseau (31, 32, 33).

16. Procédé selon la revendication 11, dans lequel ledit au moins un agrément d'imputation avec le fournisseur de services de réseau (31, 32, 33) concerne l'imputation à un compte dudit client d'un coût de ladite transaction.

17. Procédé selon la revendication 11, dans lequel le report du paiement comprend le versement sur un compte dudit vendeur d'au moins une partie d'un coût associé à ladite transaction.

18. Procédé selon la revendication 17, dans lequel le versement comprend la demande, à un fournisseur de service financier, d'effectuer le paiement.

19. Procédé selon la revendication 18, dans lequel ledit fournisseur de service financier est sélectionné dans le groupe consistant en une banque et une société de carte de crédit.

20. Procédé selon la revendication 9, dans lequel ledit compte de vendeur est un compte bancaire ou un compte de carte de crédit.

21. Procédé selon la revendication 9, comprenant le report du versement sur le compte du vendeur à une date ultérieure.

22. Procédé selon la revendication 21, comprenant le versement sur le compte du vendeur en ce qui concerne de multiples transactions.

23. Procédé selon la revendication 5, dans lequel la station informatique de client (51, 52) est configurée pour utiliser un serveur mandataire pour des services ou des hôtes sélectionnés uniquement et l'obtention d'une adresse IP de la station informatique de client comprend :
la demande, à un navigateur de la station informatique de client, d'ouvrir une connexion vers un service ou un hôte qui ne nécessite pas l'utilisation d'un serveur mandataire ; et
l'obtention de l'adresse IP de la station informatique de client par l'intermédiaire de ladite connexion.

24. Procédé selon la revendication 5, dans lequel l'obtention d'une adresse IP de la station informatique de client (51, 52) comprend :
l'activation d'une application sur ladite station informatique de client pour ouvrir une connexion vers un serveur, et
l'obtention de l'adresse IP de la station informatique de client par l'intermédiaire de ladite connexion.
